Europäisches Patentamt

European Patent Office

Office européen des brevets

(19)

(11) Publication number: **0 138 253 B1**

# EUROPEAN PATENT SPECIFICATION

(12)

(45) Date of publication of patent specification: **21.08.91**    (51) Int. Cl.⁵: **G01S 7/02**

(21) Application number: **84201336.9**

(22) Date of filing: **14.09.84**

(54) Noise reduction in CW radar systems.

(30) Priority: **30.09.83 GB 8326218**

(43) Date of publication of application:
**24.04.85 Bulletin 85/17**

(45) Publication of the grant of the patent:
**21.08.91 Bulletin 91/34**

(84) Designated Contracting States:
**DE FR GB IT SE**

(56) References cited:
**US-A- 3 021 521**
**US-A- 3 256 520**

(73) Proprietor: **PHILIPS ELECTRONIC AND ASSO-CIATED INDUSTRIES LIMITED**
**Philips House 188 Tottenham Court Road**
**London W1P 9LE(GB)**
(84) Designated Contracting States:
**GB**

Proprietor: **N.V. Philips' Gloeilampenfabrieken**
**Groenewoudseweg 1**
**NL-5621 BA Eindhoven(NL)**
(84) Designated Contracting States:
**DE FR IT SE**

(72) Inventor: **Stove, Andrew Gerald**
**c/o Philips Research Laboratories**
**Redhill Surrey RH1 5HA(GB)**
Inventor: **Vincent, Richard Paul**
**c/o Philips Research Laboratories**
**Redhill Surrey RH1 5HA(GB)**

(74) Representative: **Moody, Colin James et al**
**PHILIPS ELECTRONICS Patents and Trade**
**Marks Department Philips House 188 Totten-ham Court Road**
**London W1P 9LE(GB)**

## Description

The present invention relates to a method of noise reduction in CW radar systems and to a radar system using the noise reduction method.

CW radar systems per se are well known. If the CW signal is frequency-modulated, the radar may be used for measuring range, as for example in a radio altimeter of a type disclosed in US-A-3256520; if the oscillator is unmodulated, the radar may be used for detecting only moving objects by the Doppler effect for example as disclosed in US-A-3021521.

A problem with CW radar systems is feedthrough, that is the leakage of the signal which it is desired to transmit, plus accompanying noise, from the transmitter part of the system comprising an oscillator to the receiver part of the system comprising the mixer, without the sill being reflected externally of the system. If the system comprises a pair of aerials respectively for transmitting and receiving, RF energy may be directly coupled between the sidelobes of the two aerials. If the system comprises a single aerial for both transmitting and receiving, and non-reciprocal means such as a circulator for separating the transmitted signal from the received signal, leakage may occur at the non-reciprocal means, e.g. by virtue of circulation in the undesired sense, and/or by reflection at the aerial of part of the energy supplied thereto for transmission.

US-A-3256520 discloses a method of feedthrough cancellation for a frequency modulated CW radar to be used for ranging, for example an aircraft altimeter. In an embodiment of the altimeter an FM transmitter transmits a signal by way of a first antenna. A second antenna picks-up the reflected return signal and applies it to a first input of a mixer. In order to cancel feedthrough between the first and second antennas, a portion of the signal from the transmitter is applied to a second input of the mixer by way of a time delay element. The time delay introduced by this element is said to be adjusted to equal the time required for the feedthrough signal to reach the mixer via the transmitting and receiving antennas. The purpose of dynamically adjusting the time delay in this matter is said to be to produce a zero beat frequency as a result of mixing the delay signal with the feedthrough signal. It is evident that there is some latitude on the tolerancing of the degree of cancellation achieved in the mixing of these signals because US-A-3256520 discloses that the critical point is to ensure that the unwanted beat frequency is outside ʼthe bandwidth of a beat frequency amplifier connected to the output of the mixer. US-A-3256520 does not discuss the problem of minimising noise reduction in CW radar systems.

US-A-3021521 discloses some feedthrough nulling systems in which a correction signal is produced directly from the output signal. This correction signal is made equal in magnitude and opposite in phase to the feedthrough signal and is then algebraically combined with the feedthrough signal in such a manner that the feed-through signal fed to the receiving means will be cancelled. More particularly the correction signal is produced using first and second gyrators. A directional coupler samples the transmitted energy and supplies the sampled energy to the first gyrator and to a 90 degree phase shifting network. The second gyrator is coupled to the 90 degree phase shifting network. The outputs of the first and second gyrators are combined and applied to another directional coupler in the reflected signal path to the receiver. The correction signal cancels the feedthrough signal present in the reflected signal path. US-A-3021521 also does not discuss the problem of minimising noise in CW radars and, additionally, the nulling system it employs is relatively complicated.

FM noise in the transmitter signal is generally more significant than AM noise and it is an object of the present invention to suppress this FM noise.

According to a first aspect of the invention there is provided a method for compensating for leakages in a CW radar system comprising an oscillator for producing an RF signal, antenna means coupled to the oscillator for transmitting a signal derived from the RF signal and for receiving an echo signal produced by reflection of the transmitted signal at a target, a mixer having a local-oscillator port and a signal port, first means for supplying to said local-oscillator port via a first propagation path a first signal which is derived in frequency and phase from the oscillator and which is representative of the transmitted signal, and second means for supplying to said signal port the received echo signal or a signal representative thereof, wherein in operation a second signal which is derived in frequency and phase from the oscillator and which is representative of the transmitted signal leaks to said signal port via a second propagation path without being reflected externally of the system, said second signal arriving at said signal port with said received echo signal or signal representative thereof; characterised in that the method includes measuring the delays in various components in the first and second propagation paths and calculating, from the delays ascertained, an electrical length of a delay line to be included in one of said first and second propagation paths to effect a difference between the times taken by the first and second signals to travel the first and second propagation paths which does not exceed the time T in the expression

$$R = 4 \sin^2(\pi f T)$$

where R is the desired value of the ratio of the power in the first pair of noise sidebands to the power in the carrier as detected in the mixer, compared with the value of that ratio in the transmitted signal, and where f is the value of a difference frequency it is desired to detect in the mixer, thereby reducing noise in the mixer resulting from FM noise in the transmitted signal.

It has been known for an appreciable time that in a CW radar system, the effect of noise in the receiver which results from FM noise in the transmitter and which is associated with clutter is not as serious as might be expected, owing to the correlation effect: see the "Radar Handbook" edited by M.I. Skolnik (McGraw-Hill, 1970), Chapter 16, "CW and FM Radar", and particularly pages 16-4 to 16-6, "Noise from Clutter". The discussion therein shows how the correlation between the carrier (from which the local-oscillator signal in the radar is derived) and the returning signal enables the radar to contend with near-in clutter (i.e. undesired reflections at short ranges). The present invention is based on the recognition that a similar correlation also applies to energy that leaks from the transmitter to the signal port of the mixer without being reflected externally of the system, and that noise in the mixer resulting from FM noise in the transmitter and from such leakage can be reduced by making the difference between the electrical lengths of the propagation paths for energy intentionally supplied from the transmitter to the local-oscillator port of the mixer and for energy that undesirably leaks from the transmitter to the signal port of the mixer small. Ideally, the difference in electrical path lengths should be zero, but in practice there will generally be a residual difference. Considering a noise modulating frequency f present in the transmitted signals, the ratio of the power in the first pair of noise sidebands to the power in the carrier as detected in the receiver, compared to the value of that ratio in the transmitter, may be represented approximately by the expression

$$4 \sin^2 (\pi f \, T)$$

where T is the difference in the time taken for signals in the operating frequency range of the system to travel the respective propagation paths, this time difference resulting from the residual difference in electrical path lengths. As an example, for a difference in electrical path lengths equivalent to 1 cm in free space, T is approximately 30 picoseconds; for a value of f of 100 kHz, typical of a difference frequency it may be desired to detect in a system using the present invention, the value of the above expression is then about -94 dB. It should be noted that the expression is independent of the microwave frequency of operation, and that an adequately small residual difference in path lengths may constitute a substantial proportion of a wavelength, or even several wavelengths, at the microwave frequency: thus, in the example just given, 1 cm is equivalent to three wavelengths at 90 GHz.

It has been found that as the difference between the electrical path lengths is varied over a range of a wavelength at the microwave frequency, there is a periodic variation in the level of noise in the mixer output signal resulting from FM noise in the leakage signal; this level varies between substantially zero and a value corresponding to twice that of the expression given above, the expression itself representing an average over a wavelength at the microwave frequency.

As disclosed in section 16.7 of the above-mentioned "Radar Handbook", it is known to introduce into a CW radar system an intentional feedthrough path that is adjusted in phase and amplitude to cancel spillover energy. Such an arrangement, typically a dynamic canceller, tends to be very complex, requiring considerable additional equipment; furthermore, to overcome microphony it is most important that its components should be as rigid as possible, generally necessitating a massive assembly. The invention provides a much simpler way of alleviating the effect in the mixer of FM noise in a transmitter signal which leaks to the signal port of the mixer without being reflected externally of the system.

It has been noted (see the paper "Post-War Developments in Continuous Wave and Frequency-Modulated Radar" by W.K. Saunders, IRE Transactions on Aerospace and Navigational Electronics, March 1961, pages 7-19, particularly page 14) that in a CW radar system wherein the transmitted wave is sinusoidally frequency-modulated and wherein information of a target is derived from a second or higher harmonic, present in the echo signal, of the modulation frequency, the higher the number of the harmonic or harmonics chosen for processing of the intelligence, the smaller is the problem of "leakage" or "feed-thru". The paper then proposes that if all or nearly all the "antenna leakage signals" travel a considerable - although approximately the same - distance, the same electrical length may be placed intentionally in the "local oscillator" signal path from the transmitter to the mixer: this is beneficial because the "leakage" is then equivalent to a target at zero distance and because in such a system, the amplitude of the signal representative of the target varies with small values of the distance x as $x^n$ (where n is the number of the overtone of the modulated frequency), i.e. the amplitude tends to zero as x tends to zero. In the context of the paper, wherein such a radar is used on an aircraft in a Doppler navigator or in an altimeter, such a plurality of "leakage" signals result from reflections of the transmitted wave by different parts of the aircraft, i.e. externally of the radar system. The proposal in the paper thus concerns a different form of leakage from that with which the present invention deals; the latter is concerned with the effect of noise present in the leakage signal rather than with that of the main component of the leakage signal, and with leakage that occurs internally rather than externally. Thus the propagation path length of the local-oscillator signal is equalised with different leakage paths in the two cases, and for different purposes. There is no suggestion in the paper of noise reduction, let alone any indication of how such noise reduction is related to any residual difference in path lengths. Thus the invention may be applied to a system which is operable to derive information of a target from the echo signal otherwise than from a second or higher harmonic of a sinusoidal frequency modulation impressed on the transmitted signal.

Suitably, a method embodying the invention comprises including in the propagation path of the first signal to said local-oscillator port of the mixer delay means for substantially equalising said electrical lengths.

According to a second aspect of the invention, there is provided a CW radar system comprising an oscillator for producing an RF signal, antenna means coupled to the oscillator for transmitting a signal derived from the RF signal and for receiving an echo signal produced by reflection of the transmitted signal at a target, a mixer having a local-oscillator port and a signal port, first means for supplying to said local-oscillator port via a first propagation path a first signal which is derived in frequency and phase from the oscillator and which is representative of the transmitted signal, and second means for supplying to said signal port the received echo signal or a signal representative thereof, wherein in operation a second signal which is derived in frequency and phase from the oscillator and which is representative of the transmitted signal leaks to said signal port via a second propagation path without being reflected externally of the system, said second signal arriving at said signal port with said received echo signal or signal representative thereof and delay means in one of said first and second propagation paths; characterised in that the electrical length of the delay means is a value selected by measuring the delays in various components in the first and second propagation paths and calculated to effect a difference between the times taken by the first and second signals to travel the first and second propagation paths which does not exceed the time T in the expression

$$R = 4 \sin^2 (\pi fT)$$

where R is the desired value of the ratio of the power in the first pair of noise sidebands to the power in the carrier as detected in the mixer, compared with the value of that ratio in the transmitted signal, and where f is the value of a difference frequency it is desired to detect in the mixer, thereby reducing noise in the mixer resulting from FM noise in the transmitted signal.

As with a system to which a method embodying the first aspect of the invention is applied, a system embodying the second aspect of the invention may be operable to derive information of a target from the echo signal otherwise than from a second or higher harmonic of a sinusoidal frequency modulation impressed on the transmitted signal. For both aspects of the invention, the transmitted signal may more particularly have linear frequency modulation impressed on it, for example by a signal applied to the oscillator, or have substantially no frequency modulation impressed on it.

The invention is particularly simply applied where there is a single or predominant leakage path between the transmitter and receiver, as for example in a system comprising separate aerials repectively for transmitting and receiving. In a system comprising common antenna means for both transmitting said R.F. signal and receiving said echo signal, and wherein said second means comprise nominally non-reciprocal means via which the antenna means derives said RF signal from the oscillator, the non-reciprocal means suitably are immediately adjacent the antenna means whereby substantially to minimise the propagation path length between the non-reciprocal means and the antenna means for the signal derived by the antenna means from the oscillator and hence to reduce noise in the mixer due both to leakage in the non-reciprocal means of a portion of the signal derived from the oscillator for transmission by the antenna means and to leakage into said second means by reflection at the antenna means of a portion of the signal derived from the oscillator for transmission by the antenna means.

Since FM noise power decreases with increasing offset from the carrier frequency (i.e. the transmitted frequency), the invention is particularly suited to alleviating noise at low IFs. The invention is also particularly suited for use with transmitted frequencies in the millimetre-wave range, for which currently-available oscillators tend to be rather noisy. Such a radar may typically require FM noise reduction of at least 60 dB, and generally more.

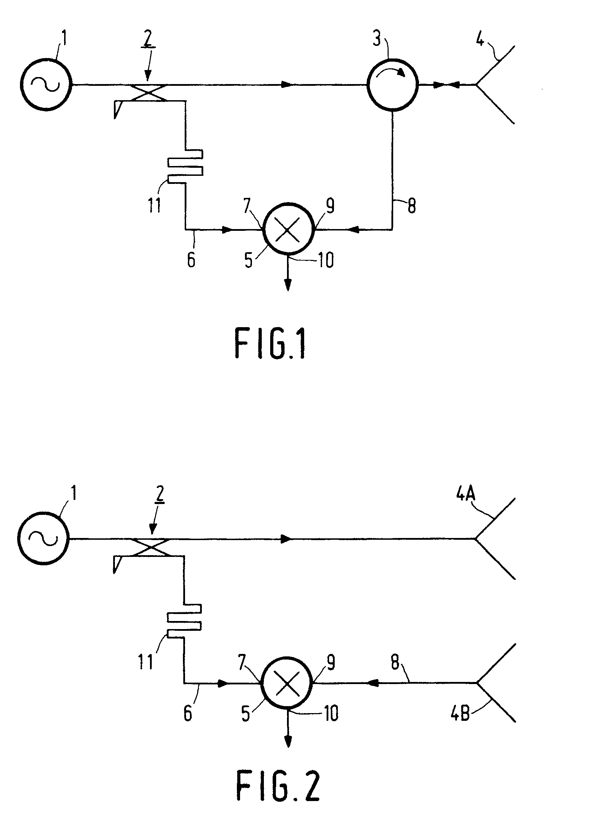

Embodiments of the invention will now be described, by way of example, with reference to the diagrammatic drawings, Figures 1 and 2 of which show schematically CW radar systems embodying the invention and comprising a single common transmitting/receiving antenna and separate antennae for transmitting and receiving respectively. Referring to Figure 1, a radar system comprises an oscillator 1, a directional coupler 2, a circulator 3 around which RF energy circulates mainly in a clockwise direction as indicated by the arrow, an antenna 4 for both transmitting and receiving, and a mixer 5. The oscillator 1, which may comprise an amplifier for amplifying a signal generated at a low power level, in operation produces R.F. energy comprising a substantially continuous carrier (which in this case is unmodulated but may be frequency-modulated, for example linearly) and noise, in particular FM noise. A substantial proportion of this R.F. energy is coupled by the directional coupler 2 to the circulator 3 and thence to the antenna 4 for transmission thereby. A desired portion of the R.F. energy produced by the oscillator 1 is supplied by means of the directional coupler 2 and a first transmission path 6 to a local-oscillator port 7 of the mixer 5, the signal at the local-oscillator port being representative of the signal transmitted by the antenna 4. An echo signal produced by reflection of the transmitted signal at a target is received by the antenna 4 and supplied by means of the circulator 3 and a second transmission path 8 to a signal port 9 of the mixer 5. The mixer produces at an output port 10 thereof an IF signal whose frequency equals the difference between the frequencies of the signals at its local-oscillator and signal ports (for example if the echo signal received by the antenna 4 has been Doppler-shifted by reflection of the transmitted signal at a target with relative movement towards or away from the radar system), and noise.

The mixer receives at its signal port 9, in addition to the desired echo signal received by the antenna 4 from a target, an undesired leakage signal derived from the oscillator 1 but not reflected externally of the system. This undesired signal may leak into the transmission path 8 and thence to port 9 by virtue of some of the energy supplied to the circulator 3 from the oscillator 1 via the directional coupler 2 circulating in the "wrong" (anticlockwise) direction, and/or by reflection of some of the energy supplied to the antenna for transmission thereby being reflected by the antenna back to the circulator and thence coupled to the transmission path 8 by circulating in the "correct" (clockwise) direction. If there is any difference between the propagation path lengths from the oscillator 1 to port 7 of the mixer for the local-oscillator signal and to port 9 of the mixer for the leakage signal, FM noise in these two signals will be detected by the mixer by virtue of the difference in the instantaneous frequency deviations of the noise components in the two signals. However, by making the propagation path lengths substantially equal, the FM noise will remain substantially undetected by the mixer. The path lengths may be substantially equalised by for example introducing a delay line 11 into the transmission path 6 coupling the directional coupler 2 to port 7 of the mixer. The appropriate length for the delay line may be ascertained by measurement of the delays in the various components in the two propagation paths and calculation; alternatively, a suitable length may be determined empirically by measurement of mixer noise with various lengths of delay line and selection of a length that substantially minimises the mixer noise over all relative phases of the local-oscillator and leakage signals (for which purpose a phase-shifter may temporarily be included in either path). Suitably, if noise in the mixer due to FM noise in said second signal is detectable, at least at intervals of a wavelength at the operating microwave frequency, throughout a range of relative electrical lengths encompassing zero difference, the relative electrical lengths are selected to be such as substantially to obtain a broad minimum in the noise in the mixer; otherwise, the difference is made sufficiently small to reduce such noise below detectability in normal use.

Where, as in this embodiment, leakage may occur at two successive components (the circulator 3 and the antenna 4), mixer noise due to leakage at both components may be reduced by arranging that the two components are immediately adjacent one another so as substantially to minimise the propagation path length therebetween for the signal derived from the oscillator by the component further therefrom, and hence that there is as little difference as possible between the propagation path lengths of the two leakage signals. If, for example, the components comprise waveguides, a waveguide connecting flange of the antenna may be bolted to a waveguide flange of one port of the circulator. However, this may be unnecessary particularly if the leakage at one component, for example the circulator, is much less than at the other; entirely adequate results may be obtainable by arranging the two components fairly close together and arranging for the propagation path length to the local-oscillator port of the mixer to substantially equal the path length for the leakage signal of greater magnitude.

Microphony, due for example to vibration, can be a serious problem in CW radar systems. The invention may also inherently provide alleviation of this problem by reducing the response of the mixer to FM noise whose presence results from the effect of such vibration on the source of the leakage signal.

The embodiment shown in Figure 2 comprises, instead of the circulator 3 and single antenna 4, two antennae 4A and 4B arranged side-by-side with their respective narrow main lobes pointing in the same direction, the antennae being respectively connected to the directional coupler 2 and to port 9 of the mixer. In this case, energy may leak without being reflected externally of the system from the transmitting antenna 4A to the receiving antenna 4B via the sidelobes of the antennae. To reduce mixer noise due to oscillator FM noise, the length of the delay line 11 included in the transmission path 6 is selected so that the propagation path length from the oscillator to the local-oscillator port of the mixer is substantially equal to the propagation path length from the oscillator to the signal port of the mixer via the direct radiation path between the two antenna.

A CW radar system embodying the invention may differ from those shown in the drawings. For example, either of the systems shown may be modified by the addition of components, e.g. an isolator in one or each of the transmission paths 6 and 8, an amplifier in the transmission path 8 for amplifying the received echo signals, and/or means for frequency-translating the signal generated by the oscillator 1 after coupling out the local-oscillator signal and for providing corresponding translation of the received echo signal before supplying it to the signal port 9 of the mixer. An amplifier may for example be included after the directional coupler 2 (and, in the system of Figure 1, before the circulator 3).

The signal supplied to the local-oscillator port of the mixer may, instead of being a portion of the power generated by the transmitter oscillator, be generated by a separate oscillator coupled to the transmitter oscillator by a phase-locked-loop having a frequency response high enough to cater for the range of Doppler frequencies of interest and for any frequency moduation applied to the oscillator. In any case, the local-oscillator signal should be derived in frequency and phase from the transmitter oscillator, that is to say, be coherent with it, and thus be representative of the transmitted signal.

## Claims

1. A method for compensating for leakages in a CW radar system comprising an oscillator (1) for producing an RF signal, antenna means (4 or 4A, 4B) coupled to the oscillator (1) for transmitting a signal derived from the RF signal and for receiving an echo signal produced by reflection of the transmitted signal at a target, a mixer (5) having a local-oscillator port (7) and a signal port (9), first means (2) for supplying to said local-oscillator port (7) via a first propagation path a first signal which is derived in frequency and phase from the oscillator (1) and which is representative of the transmitted signal, and second means for supplying to said signal port (9) the received echo signal or a signal representative thereof, wherein in operation a second signal which is derived in frequency and phase from the oscillator (1) and which is representative of the transmitted signal leaks to said signal port (9) via a second propagation path without being reflected externally of the system, said second signal arriving at said signal port (9) with said received echo signal or signal representative thereof; characterised in that the method includes measuring the delays in various components in the first and second propagation paths and calculating, from the delays ascertained, an electrical length of a delay line (11) to be included in one of said first and second propagation paths to effect a difference between the times taken by the first and second signals to travel the first and second propagation paths which does not exceed the time T in the expression

$$R = 4 \sin^2(\pi fT)$$

where R is the desired value of the ratio of the power in the first pair of noise sidebands to the power in the carrier as detected in the mixer, compared with the value of that ratio in the transmitted signal, and where f is the value of a difference frequency it is desired to detect in the mixer, thereby reducing noise in the mixer resulting from FM noise in the transmitted signal.

2. A CW radar system comprising an oscillator (1) for producing an RF signal, antenna means (4 or 4A, 4B) coupled to the oscillator (1) for transmitting a signal derived from the RF signal and for receiving an echo signal produced by reflection of the transmitted signal at a target, a mixer (5) having a local-oscillator port (7) and a signal port (9), first means (2) for supplying to said local-oscillator port (7) via a first propagation path a first signal which is derived in frequency and phase from the oscillator (1) and which is representative of the transmitted signal, second means for supplying to said signal port (9) the received echo signal or a signal representative thereof, wherein in operation a second signal which is derived in frequency and phase from the oscillator and which is representative of the transmitted signal leaks to said signal port via a second propagation path without being reflected externally of the system, said second signal arriving at said signal port (9) with said received echo signal or signal representative thereof, and delay means (11) in one of said first or second propagation paths; characterised in that the electrical length of the delay means (11) is a value selected by measuring the delays in various components in the first and second propagation paths and calculated to effect a difference between the times taken by the first and second signals to travel the first and second propagation paths which does not exceed the time T in the expression

$$R = 4 \sin^2(\pi fT)$$

where R is the desired value of the ratio of the power in the first pair of noise sidebands to the power in the carrier as detected in the mixer, compared with the value of that ratio in the transmitted signal, and where f is the value of a difference frequency it is desired to detect in the mixer, thereby reducing noise in the mixer resulting from FM noise in the transmitted signal.

**Revendications**

1. Procédé pour compenser les fuites dans un système radar à ondes entretenues comprenant un oscillateur (1) pour produire un signal RF, des antennes (4 ou 4A, 4B) couplées à l'oscillateur (1) pour émettre un signal dérivé du signal RF et pour recevoir un signal d'écho produit par la réflexion du signal émis sur une cible, un mélangeur (5) comportant une porte d'oscillateur local (7) et une porte de signal (9), un premier moyen (2) pour fournir à la porte d'oscillateur local (7), par l'intermédiaire d'un premier trajet de propagation, un premier signal qui est dérivé en fréquence et en phase de l'oscillateur (1) et qui est représentatif du signal émis, et un second moyen pour fournir à la porte de signal (9), le signal d'écho reçu ou un signal représentatif de celui-ci, dans lequel, en fonctionnement, un second signal qui est dérivé en fréquence et en phase de l'oscillateur (1) et qui est représentatif du signal émis s'échappe vers la porte de signal (9) en passant par un second trajet de propagation sans être réfléchi extérieurement au système, le second signal parvenant à la porte de signal (9) avec le signal d'écho reçu ou le signal représentatif de celui-ci, caractérisé en ce que le procédé implique la mesure des retards dans divers composants dans le premier et le second trajet de propagation et le calcul, à partir des retards constatés, d'une longueur électrique d'une ligne à retard (11) à incorporer dans l'un des premier et second trajets de propagation en vue de réaliser une différence entre les temps mis par le premier et le second signal pour parcourir le premier et le second trajet de propagation, qui n'excède pas le temps T dans l'expression :

$$R = 4 \sin^2(\pi fT)$$

où R est la valeur souhaitée du rapport entre la puissance dans la première paire de bandes latérales de bruit et la puissance dans la porteuse détectée dans le mélangeur, comparée à la valeur de ce rapport dans le signal émis, et où f est la valeur d'une fréquence de différence que l'on souhaite détecter dans le mélangeur, réduisant ainsi le bruit dans le mélangeur résultant du bruit FM dans le signal émis.

2. Système radar à ondes entretenues comprenant un oscillateur (1) pour produire un signal RE, des antennes (4 ou 4A, 4B) couplées à l'oscillateur (1) pour émettre un signal dérivé du signal RF et pour recevoir un signal d'écho produit par la réflexion du signal émis sur une cible, un mélangeur (5) comportant une porte d'oscillateur local (7) et une porte de signal (9), un premier moyen (2) pour fournir à la porte d'oscillateur local (7), par l'intermédiaire d'un premier trajet de propagation, un premier signal qui est dérivé en fréquence et en phase de l'oscillateur (1) et qui est représentatif du signal émis, et un second moyen pour fournir à la porte de signal (9), le signal d'écho reçu ou un signal représentatif de celui-ci, dans lequel, en fonctionnement, un second signal qui est dérivé en fréquence et en phase de l'oscillateur et qui est représentatif du signal émis, s'échappe vers la porte de signal par un second trajet de propagation sans être réfléchi extérieurement au système, le second signal parvenant à la porte de signal (9) avec le signal d'écho reçu ou le signal représentatif de celui-ci, et un moyen à retard (11) dans l'un des premier et second trajets de propagation, caractérisé en ce que la longueur électrique du moyen à retard (11) est une valeur sélectionnée en mesurant les retards dans divers composants dans le premier et le second trajet de propagation et calculée pour établir, entre les temps mis par le premier et le second signal pour parcourir le premier et le second trajet de propagation, une différence qui n'excède pas le temps T dans l'expression :

$$R = 4 \sin^2(\pi fT)$$

où R est la valeur souhaitée du rapport entre la puissance dans la première paire de bandes latérales de bruit et la puissance dans la porteuse détectée dans le mélangeur, comparée à la valeur de ce rapport dans le signal émis et où f est la valeur d'une fréquence de différence que l'on souhaite détecter dans le mélangeur, diminuant ainsi le bruit dans le mélangeur résultant du bruit FM dans le signal émis.

**Patentansprüche**

1. Verfahren zum Ausgleichen von Signalverlusten in einem mit stetigen Wellen arbeitenden Radarsystem mit einem Oszillator (1) zum Erzeugen eines HF-Signals, mit dem Oszillator (1) gekoppelten Antennenmitteln (4 oder 4A, 4B)z um Ausstrahlen eines von dem HF-Signal abgeleiteten Signals und zum Empfangen eines durch Reflexion des ausgestrahlten Signals an einem Ziel erzeugten Echosignals, einer Mischstufe (5) mit einem Ortsoszillatorport (7) und einem Signalport (9), ersten Mitteln (2) um dem genannten Ortsoszillatorport (7) über einen ersten Ausbreitungsweg ein erstes Signal zuzuführen, das frequenz- und phasenmäßig von dem Oszillator (1) abgeleitet und für das ausgestrahlte Signal repräsentativ ist, sowie zweiten Mitteln um dem genannten Signalport (9) das empfangene Echosignal oder ein für dieses repräsentatives Signal zuzuführen, wobei im Betrieb ein frequenz- und phasenmäßig von dem Oszillator (1) abgeleitetes und für das ausgestrahlte Signal repräsentatives zweites Signal über einen zweiten Ausbreitungsweg ohne Reflexion außerhalb des Systems zu dem genannten Signalport (9) wegleckt, wobei dieses zweite Signal zusammen mit dem empfangenen Echosignal oder dem für dasselbe repräsentativen Signal an das genannte Signalport (9) gelangt; dadurch gekennzeichnet, daß das Verfahren die nachfolgenden Verfahrensschritte aufweist: das Messen der Verzögerungen in den jeweiligen Bauelementen in dem ersten und zweiten Ausbreitungsweg und das aus den ermittelten Verzögerungen Berechnen einer elektrischen Länge einer in einem der genannten ersten und zweiten Ausbreitungswege anzuordnenden Verzögerungsleitung (11) zum Erzeugen einer Differenz zwischen den von den ersten und zweiten Signalen beanspruchten Zeiten zum zurücklegen des ersten und zweiten Ausbreitungsweges, die der Zeit T in dem nachfolgenden Ausdruck nicht überschreitet:

$$R = 4 \sin^2(\pi fT)$$

wobei R der erwünschte Wert des Verhältnisses der Leistung in dem ersten Paar Rauschseitenbänder zu der Leistung in dem Träger, wie in der Mischstufe detektiert, ist, dies im Vergleich zu dem Wert dieses Verhältnisses in dem Ausgestrahlten Signal, und wobei f der Wert einer in der Mischstufe zu detektieren erwünschten Differenzfrequenz ist, wodurch von dem FM-Geräusch in dem ausgestrahlten Signal herrührendes Geräusch in der Mischstufe verringert wird,

2. Mit stetigen Wellen arbeitendes Radarsystem mit einem Oszillator (1) zum Erzeugen eines HF-Signals, mit dem Oszillator (1) gekoppelten Antennenmitteln (4 oder 4A, 4B)zum Ausstrahlen eines von dem HF-Signal abgeleiteten Signals und zum Empfangen eines durch Reflexion des ausgestrahlten Signals an einem Ziel erzeugten Echosignals, einer Mischstufe (5) mit einem Ortsoszillatorport (7) und einem Signalport (9), ersten Mitteln (2) um dem genannten Ortsoszillatorport (7) über einen ersten Ausbreitungsweg ein erstes Signal zuzuführen, das frequenz- und phasenmäßig von dem Oszillator (1) abgeleitet und für das ausgestrahlte Signal repräsentativ ist, sowie zweiten Mitteln um dem genannten Signalport (9) das empfangene Echosignal oder ein für dieses repräsentatives Signal zuzuführen, wobei im Betrieb ein frequenz- und phasenmäßig von dem Oszillator (1) abgeleitetes und für das ausgestrahlte Signal repräsentatives zweites Signal über einen zweiten Ausbreitungsweg ohne Reflexion außerhalb des Systems zu dem genannten Signalport (9) wegleckt, wobei dieses zweite Signal zusammen mit dem empfangenen Echosignal oder dem für dasselbe repräsentativen Signal an das genannte Signalport (9) gelangt, und mit Verzögerungsmitteln (11) in einem der genannten ersten und zweiten Ausbreitungswege, dadurch gekennzeichnet, daß die elektrische Länge der Verzögerungsmittel (11) ein durch Messung der Verzögerungen in den jeweiligen Bauelementen in dem ersten und zweiten Ausbreitungsweg gewählter und zum Erzeugen einer Differenz zwischen den von dem ersten und zweiten Signal beanspruchten Zeiten zum Zurücklegen des ersten und zweiten Ausbreitungsweges berechneter Wert ist, der die Zeit T in dem nachfolgenden Ausdruck nicht überschreitet:

$$R = 4 \sin^2(\pi fT)$$

wobei R der erwünschte Wert des Verhältnisses der Leistung in dem ersten Paar Rauschseitenbänder zu der Leistung in dem Träger, wie in der Mischstufe detektiert, ist, im Vergleich zu dem Wert dieses Verhältnisses in dem ausgestrahlten Signal, und wobei f der Wert einer in der Mischstufe zu detektieren erwünschten Differenzfrequenz ist, wodurch von dem FM-Geräusch in dem ausgestrahlten Signal herrührendes Geräusch in der Mischstufe verringert wird.

FIG.1

FIG.2